# EUROPÄISCHE PATENTSCHRIFT

(11) **EP 2 957 362 B1**
(45) Veröffentlichungstag und Bekanntmachung des Hinweises auf die Patenterteilung: **17.08.2016**
(21) Anmeldenummer: 15170313.9
(22) Anmeldetag: 02.06.2015
(51) Int. Cl.: B21D 28/02, B21D 45/00, B23Q 11/00, B23Q 17/00

(54) **BLECHBEARBEITUNGSMASCHINE MIT EINER SPÄNEABSAUGEINRICHTUNG UND VERFAHREN ZUM ERFASSEN EINER STÖRUNG IN DER SPÄNEABSAUGEINRICHTUNG**
SHEET METAL WORKING MACHINE WITH A CHIP SUCTION DEVICE AND METHOD FOR DETECTING A MALFUNCTION IN THE CHIP SUCTION DEVICE
MACHINE DE TRAITEMENT DE TÔLE DOTÉE D'UN DISPOSITIF D'ASPIRATION DE COPEAUX ET PROCÉDÉ DE DÉTECTION D'UN DYSFONCTIONNEMENT DANS LE DISPOSITIF D'ASPIRATION DE COPEAUX

(30) Priorität: 17.06.2014 DE 102014211567
(43) Veröffentlichungstag der Anmeldung: 23.12.2015
(73) Patentinhaber: TRUMPF Werkzeugmaschinen GmbH + Co. KG, 71254 Ditzingen (DE)
(72) Erfinder: BARTHO, Frank, 71638 Ludwigsburg (DE); APPEL, Jürgen, 71254 Ditzingen (DE)
(74) Vertreter: Prüfer & Partner mbB Patentanwälte · Rechtsanwälte

(56) Entgegenhaltungen:
- DE-A1- 4 128 933
- GB-A- 2 127 957
- US-A- 3 822 622
- US-A- 5 022 793
- US-A- 6 003 418

## Beschreibung

Die Erfindung betrifft eine Blechbearbeitungsmaschine mit einer Späneabsaugeinrichtung, insbesondere eine Blechbearbeitungsmaschine mit einer Späneabsaugeinrichtung, die eine Störungserfassungseinrichtung aufweist.

Beim Stanzen von Blechen auf Stanzmaschinen oder kombinierten Stanz- und Laserschneidmaschinen ist es erforderlich, Späne und Stanzbutzen abzusaugen. Andernfalls können die Späne und Stanzbutzen auf oder an dem Blech verbleiben und dieses bei einer Verfahrbewegung beschädigen, da Kollisionen oder Verhakungen auftreten können. Aus diesem Grund sind Späneabsaugeinrichtungen in den Stanzmaschinen oder Stanz- und Laserschneidmaschinen vorgesehen.

Eine solche Stanzmaschine mit einer Späneabsaugeinrichtung ist aus US 5 022 793 A bekannt.

Aber selbst bei vorhandenen Späneabsaugeinrichtungen besteht die Gefahr einer Störung, insbesondere einer Verschmutzung von Sieben in der Absaugleitung oder einer Undichtigkeit einer Späneklappe, was zu denselben Problemen führt.

Aus diesem Grund war es bisher erforderlich, die Siebe häufig zu reinigen sowie eine Dichtigkeit der Späneabsaugeinrichtung mittels einer separaten Vorrichtung bei einem Stillstand der Blechbearbeitungsmaschine, beispielsweise der Stanzmaschine oder Stanz- und Lasermaschine zu prüfen. Da dies jedoch sehr aufwändig ist, werden diese Maßnahmen häufig erst nach erfolgten Kollisionen bzw. Blechverhakungen durchgeführt.

Der Erfindung liegt die Aufgabe zu Grunde, eine Blechbearbeitungsmaschine mit einer Späneabsaugeinrichtung und ein Verfahren bereitzustellen, die die obigen Probleme lösen und einen prozesssicheren und bedienfreundlichen Betrieb der Stanzmaschine sicherstellen.

Die Aufgabe wird durch eine Blechbearbeitungsmaschine gemäß Anspruch 1 und ein Verfahren gemäß Anspruch 9 gelöst. Weiterentwicklungen der Erfindung sind Gegenstand der anhängigen Ansprüche.

Durch das Bereitstellen einer Blechbearbeitungsmaschine gemäß Anspruch 1, insbesondere durch das Vorsehen eines Unterdrucksensors in einer Absaugleitung zwischen einem stromabwärtig letzten Sieb und einem Absauggebläse, ist es möglich, mehrere verschiedene Störquellen mit einem einzigen Sensor zu erfassen und gleichzeitig einen erhöhten Aufwand für eine Anordnung des Unterdrucksensors innerhalb des Späneraums zu vermeiden.

Die Erfindung wird nun anhand von Ausführungsbeispielen unter Bezugnahme auf die beigefügten Zeichnungen erläutert.

Insbesondere zeigt:
- Fig. 1: eine Stanzmaschine mit einer erfindungsgemäßen Späneabsaugeinrichtung; und
- Fig. 2: eine Seitenansicht eines Ausführungsbeispiels der Späneabsaugeinrichtung.

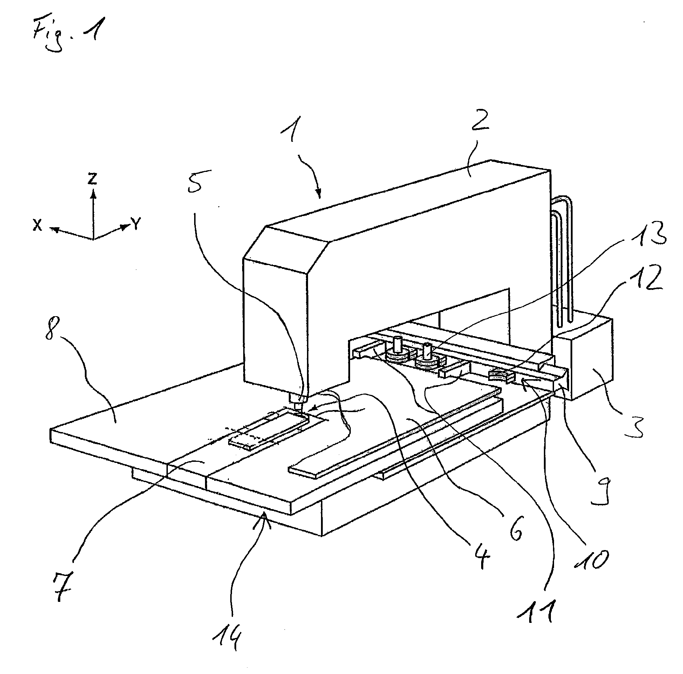

In Fig. 1 ist eine Stanzmaschine 1 als Ausführungsbeispiel für eine Blechbearbeitungsmaschine dargestellt. Ein wesentlicher Bestandteil der Stanzmaschine 1 ist ein C-Rahmen 2. Der C-Rahmen 2 besteht aus einer torsionssteifen Schweißkonstruktion aus Stahl.

Am hinteren Ende des C-Rahmens 2 ist ein Hydraulikaggregat 3 vorgesehen, mit dem ein Stößel 5 über einen nicht gezeigten Stößelantrieb hydraulisch angetrieben wird.

Auf der unteren Innenseite des C-Rahmens 2 ist eine untere Werkzeugaufnahme 4 zum Aufnehmen eines Werkzeugunterteils eines Stanzwerkzeugs in einem Konsolenraum vorgesehen. Das Werkzeugunterteil ist über einen Drehantrieb um 360° drehbar und in jeder beliebigen Winkellage feststellbar.

Auf der oberen Innenseite des C-Rahmens 2 ist der Stößel 5 vorgesehen. Der Stößel 5 mit einer oberen Werkzeugaufnahme nimmt ein Werkzeugoberteil des Stanzwerkzeugs formschlüssig und spielfrei auf. Der Stößel 5 ist ebenfalls um 360° drehbar und kann in jeder beliebigen Winkellage festgestellt werden. Dafür ist ein zweiter Drehantrieb vorhanden.

Die Drehantriebe werden von einer nicht gezeigten Maschinensteuerungsvorrichtung gesteuert, die in einem separaten Schaltschrank vorgesehen ist. Weiterhin wird auch eine Stößelsteuerung sowie sämtliche Linearantriebe zur Bewegung einer Blechplatte 6 und Aktuatoren für Sonderfunktionen, beispielsweise das Ab- und Hochklappen einer Teileklappe 7, durch die Maschinensteuerungsvorrichtung gesteuert. Die Steuerungsvorrichtung weist als Ein- und Ausgabemittel eine Tastatur und einen Monitor auf. Die Steuerungsfunktionen werden von Mikrocontrollern ausgeführt. Bearbeitungsprogramme und Betriebsparameter sind in einem Speicherbereich der Steuerungsvorrichtung abgespeichert.

Auf der unteren Innenseite des C-Rahmens 2 ist ein Maschinentisch 8 angeordnet, der eine Querschiene 9 mit einem Werkzeugmagazin 10 aufweist. An der Querschiene 9 sind Spannpratzen 11 zum Festhalten der Blechplatte 6 angeordnet. Die Spannpratzen 11 können an geeigneten Stellen auf der Querschiene 9 befestigt werden, und können so versetzt werden, dass das Blech 6 sicher gehalten wird, aber das Blech 6 nicht an einer zu bearbeitenden Fläche gegriffen wird. In dem Werkzeugmagazin 10 sind mehrere, hier drei, Werkzeugaufnahmen 12 für mehrere, hier zwei, Stanzwerkzeuge 13 vorhanden. Vorderhalb der unteren Werkzeugaufnahme 4 ist die Teileklappe 7 zum Ausschleusen von kleineren Blechteilen zentral angeordnet.

Unterhalb des Maschinentischs 8 ist in dem C-Rahmen 2 eine erfindungsgemäße Späneabsaugeinrichtung 14 vorgesehen.

Im Betrieb fährt der Maschinentisch 8 zum Stanzen in einer Y-Richtung gemeinsam mit der Querschiene 9, an der die Spannpratzen 11 befestigt sind, mit denen das Blech 6 gehalten wird, in eine programmierte Position, und die Querschiene 9 fährt in X-Richtung in die programmierte Position, wobei das Blech 6 über den Maschinentisch 8 gleitet. Dann wird von dem Stößel 5 ein Stanzhub durchgeführt. Im Anschluss daran wird mit demselben Prinzip die nächste Stanzposition angefahren.

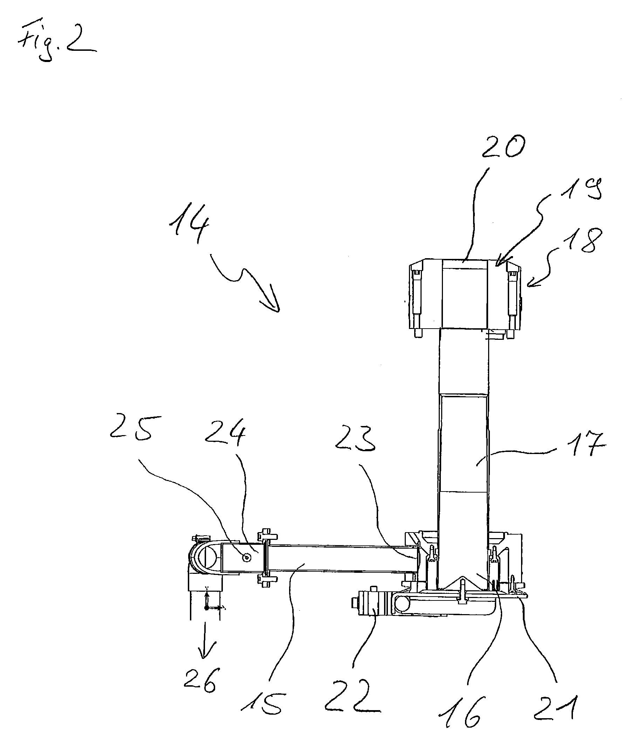

Fig. 2 zeigt eine Seitenansicht eines Ausführungsbeispiels der Späneabsaugeinrichtung 14 in der Stanzmaschine 1. Die Späneabsaugeinrichtung 14 ist mit einem nicht gezeigten Vakuumgenerator, nämlich einem Absauggebläse 26 versehen. Das Absauggebläse 26 ist dazu ausgelegt, einen Unterdruck von mindestens 300 mbar zu erzeugen. Das Absauggebläse 26 ist über eine Absaugleitung 15 mit einem Späneraum 16 verbunden. Von dem Späneraum 16 ist nach oben gehend ein Absaugrohr 17 vorgesehen. Das Absaugrohr 17 ist an seinem oberen Ende mit einer Konsole 18 verbunden. In der Konsole 18 sind die untere Werkzeugaufnahme 4 (Fig. 1) und darin eine Stanzmatrize 19 angeordnet. Die Stanzmatrize 19 weist eine Matrizenöffnung 20 auf, die über das Absaugrohr 17 mit dem Späneraum 16 verbunden ist.

Der Späneraum 16 weist eine Späneklappe 21 auf, durch die die Späne aus dem Späneraum 16 ausgebracht werden können. Die Späneklappe 21 ist mit einer Antriebsvorrichtung 22 versehen, mit der die Späneklappe 21 geöffnet und geschlossen werden kann. Die Antriebsvorrichtung 22 ist mit der Steuerungsvorrichtung verbunden. Optional ist die Antriebsvorrichtung 22 so angepasst und ansteuerbar, dass eine Rüttelbewegung der Späneklappe 21 ausgeführt wird.

In der Absaugleitung 15 ist ein Sieb 23 angeordnet. Das Sieb 23 ist hier an dem Anschluss der Absaugleitung 15 an dem Späneraum 16 vorgesehen. Alternativ kann es auch an einer anderen Stelle in der Absaugleitung 15 angeordnet sein. Optional ist ein zweites Sieb 24 in der Absaugleitung 15 vorgesehen. In diesem Fall ist das Sieb 23 an dem Anschluss ein Grobsieb und das stromabwärts in Richtung zu dem Absauggebläse 26 gelegene Sieb ist ein Feinsieb.

Weiterhin ist an der Absaugleitung 15 ein Unterdrucksensor 25 angeordnet. Der Unterdrucksensor 25 ist zwischen dem Absauggebläse 26 und dem stromabwärtig letzten Sieb 24 angeordnet. Dadurch kann ein Druckabfall über sämtliche Siebe und somit eine Verstopfung aller eingesetzten Siebe erfasst werden.

In einer alternativen Ausführungsform ist der Unterdrucksensor nicht an der Absaugleitung 14 angeordnet, sondern über ein Rohr oder einen Schlauch damit verbunden. In einer weiteren alternativen Ausführungsform befindet sich der Unterdrucksensor innerhalb der Absaugleitung.

Der Unterdrucksensor 25 liefert ein Ausgangssignal bezüglich des erfassten Unterdrucks an die Steuerungsvorrichtung. Der Unterdrucksensor 25 weist mindestens einen Schaltpunkt auf, an dem sich das Ausgangssignal in Abhängigkeit von dem erfassten Unterdruck ändert. Der Schaltpunkt ist bei einem Unterdruckwert vorgesehen, der einen Schwellwert bildet, der angibt, dass die Siebe unzulässig verschmutzt sind. Eine weitere Bearbeitung von Blechplatten wird dann durch die Steuerungseinrichtung unterbunden, wodurch die Störung signalisiert wird. Ein optionaler weiterer Schaltpunkt ist bei einem Schwellwert, der angibt, dass die Verschmutzung der Siebe kritisch ist. Durch die Steuerungsvorrichtung wird einem Bediener dann angezeigt, dass eine Reinigung oder ein Austausch der Siebe 23, 24 erforderlich ist.

In einer alternativen Ausführungsform ist der Unterdrucksensor 25 nicht mit Schaltpunkten für die Schwellwerte versehen, sondern der Unterdrucksensor 25 liefert ein dem erfassten Unterdruck entsprechendes elektrisches Drucksignal an die Steuerungsvorrichtung. Das Drucksignal kann analog oder digital sein. Die Steuerungsvorrichtung erkennt dann, ob das Drucksignal einen Wert annimmt, so dass ein in der Steuerungsvorrichtung gespeicherter Schwellwert überschritten ist.

Ein weiterer optionaler Schwellwert in dem Unterdrucksensor 25 oder in der Steuerungsvorrichtung ermöglicht es der Steuerungsvorrichtung, zu erkennen, ob die geschlossene Späneklappe 21 undicht ist.

Im Betrieb erfasst der Unterdrucksensor zum Erkennen einer Störung in der Späneabsaugeinrichtung 14 den Unterdruck in der Absaugleitung 15 zwischen dem stromabwärtig letzten Sieb 24 und dem Absauggebläse 26.

Um einen Unterdruck in dem Konsolenraum mittels des Unterdrucks in der Absaugleitung 15 bestimmen zu können, wird der Unterdruck in der Absaugleitung 15 zwischen dem stomabwärtig letzten Sieb 24 und dem Absauggebläse 26 über Versuchsreihen einem Unterdruck in dem Konsolenraum, also im Bereich der Matrizenöffnung 20, empirisch zugeordnet. Somit kann über eine Erfassung des Unterdrucks in der Absaugleitung 15 zwischen dem stromabwärtig letzten Sieb 24 und dem Absauggebläse 26 bestimmt werden, ob ein für eine einwandfreie Funktion erforderlicher Unterdruck im Konsolenraum, der durch Versuche ermittelt wurde, vorliegt.

Zum Erfassen der Verschmutzung der Siebe wird die Späneklappe 21 geöffnet und das Absauggebläse 26 aktiviert. Dadurch liegt im Späneraum 16 Umgebungsluftdruck vor und somit kann über die Erfassung des Unterdrucks in der Absaugleitung 15 ein Druckabfall an den Sieben 23, 24 und somit deren Verschmutzung erfasst werden.

In dem vorliegenden Ausführungsbeispiel zeigt ein Unterdruck in der Absaugleitung 15 von 0 mbar bis -60 mbar, dass eine ausreichende Absaugleistung an der Stanzmatrize 19 sichergestellt ist. In empirischen Versuchen wurde ermittelt, dass in diesem Ausführungsbeispiel ein Unterdruck von -60 mbar einem Verschmutzungsgrad der Siebe 23, 24 von 70% entspricht. Unterdruckwerte von - 60 mbar bis -150 mbar entsprechen in diesem Ausführungsbeispiel einem Verschmutzungsgrad von 70% bis 90%. Bei diesen erfassten Werten wird von der Steuerungsvorrichtung ein Signal ausgegeben, dass das Sieb oder die Siebe gereinigt oder ausgetauscht werden müssen. Bei einem Wert von über -150 mbar (kleiner als -150 mbar) kann der Produktionsbetrieb nicht fortgesetzt werden und die Steuerungsvorrichtung der Stanzmaschine 1 stoppt den Betrieb, da in der Konsole keine ausreichende Absaugleistung mehr vorhanden ist und die Gefahr von Schäden durch Verhakungen zu groß wird.

Zum Erfassen, ob die Späneklappe 21 in dem geschlossenen Zustand undicht ist, wird zunächst die Späneklappe 21 geschlossen und die Matrizenöffnung 20 beispielsweise mittels einer dünnen Blechplatte 6 mit einer Dicke von ca. 1 mm vollständig abgedeckt. Anschließend wird das Absauggebläse 26 aktiviert und mittels des Unterdrucksensors 25 in der Absaugleitung 15 der Unterdruck bestimmt. Als Schwellwert für eine undichte Späneabsaugeinrichtung 14 wurde empirisch ein Wert von -150 mbar ermittelt. Ein Unterschreiten dieses Werts (ein Wert, der zwischen 0 mbar und -150 mbar liegt) zeigt an, dass der Produktionsbetrieb nicht fortgesetzt werden kann und die Steuerungsvorrichtung stoppt den Betrieb, da ansonsten die Gefahr von Schäden durch Verhakungen zu groß wird.

Optional wird in diesem Fall die Antriebseinrichtung 22 der Späneklappe 21 dann so angesteuert, dass eine Rüttelbewegung durchgeführt wird, um Späne oder Stanzbutzen von der Späneklappe 21 zu entfernen, so dass diese wieder dicht schließt.

## Patentansprüche

1. Blechbearbeitungsmaschine (1) mit einer Späneabsaugeinrichtung (14) und einer Steuerungsvorrichtung, wobei die Späneabsaugeinrichtung (14) aufweist,
einen mit einer Matrizenöffnung (20) einer Stanzmatrize (19) verbundenen Späneraum (16) zum Sammeln von Spänen, wobei
der Späneraum (16) mit einer Späneklappe (21) und einer Absaugleitung (15) versehen ist, und
die Absaugleitung (15) mindestens ein Sieb (23, 24) aufweist,
ein mit der Absaugleitung (15) verbundenes Absauggebläse (26) zum Erzeugen eines Unterdrucks in der Späneabsaugeinrichtung (14), **gekennzeichnet durch**
einen zwischen einem stromabwärtig letzten Sieb (24) und dem Absauggebläse (26) mit der Absaugleitung (15) verbundenen Unterdrucksensor(25), der ausgebildet ist, Signale an die Steuerungsvorrichtung zu liefern.

2. Blechbearbeitungsmaschine (1) gemäß Anspruch 1, wobei die Spanabsaugeinrichtung (14) mindestens zwei Siebe aufweist, wobei mindestens ein Sieb als Grobsieb und mindestens ein Sieb als Feinsieb ausgebildet sind.

3. Blechbearbeitungsmaschine (1) gemäß Anspruch 1 oder 2, wobei die Steuerungsvorrichtung ausgebildet ist, aus den Signalen des Unterdrucksensors (25) mindestens einen Schwellwert, der eine unzulässige Verschmutzung der Siebe (23, 24) angibt, zu erkennen.

4. Blechbearbeitungsmaschine (1) gemäß Anspruch 3, wobei die Steuerungsvorrichtung ausgebildet ist, aus den Signalen des Unterdrucksensors (25) mindestens zwei Schwellwerte zu erkennen, und ein zweiter Schwellwert eine kritische Verschmutzung der Siebe (23, 24) angibt.

5. Blechbearbeitungsmaschine gemäß Anspruch 3 oder 4, wobei die Steuerungsvorrichtung ausgebildet ist, aus den Signalen des Unterdrucksensors (25) einen Schwellwert zu erkennen, der eine undichte Späneklappe (21) angibt.

6. Blechbearbeitungsmaschine (1) gemäß Anspruch 5, wobei die Späneklappe (21) mit einer Antriebseinrichtung (22) versehen ist, die dazu ausgebildet ist, eine Rüttelbewegung der Späneklappe (21) auszuführen, und die Steuerungsvorrichtung ausgebildet ist die Rüttelbewegung anzusteuern, wenn die Steuerungsvorrichtung den Schwellwert erkennt, der eine undichte Späneklappe (21) angibt.

7. Blechbearbeitungsmaschine (1) gemäß einem der Ansprüche 3 bis 6, wobei der Unterdrucksensor (25) mit einer jeweiligen Anzahl von Schaltpunkten für die Schwellwerte versehen ist.

8. Blechbearbeitungsmaschine (1) gemäß einem der Ansprüche 3 bis 6, wobei der Unterdrucksensor (25) ausgebildet ist, dem erfassten Unterdruck entsprechende Drucksignale auszugeben, und die Steuerungsvorrichtung ausgebildet ist, zu erkennen, ob die Drucksignale Werte annehmen, so dass der mindestens eine Schwellwert überschritten ist.

9. Verfahren zum Erfassen einer Störung in einer Späneabsaugeinrichtung (14) in einer Blechbearbeitungsmaschine (1) gemäß einem der vorangehenden Ansprüche, das folgende Schritte aufweist,
- Erfassen eines Unterdrucks zwischen dem Absauggebläse (26) und dem stromabwärtig letzten Sieb (24),
- Bestimmen anhand des Unterdrucks über empirisch ermittelte Werte, ob die Störung in der Späneabsaugeinrichtung (14) vorliegt,
- Signalisieren der Störung.

10. Verfahren gemäß Anspruch 9 mit einer Blechbearbeitungsmaschine (1) gemäß einem der Ansprüche 3 bis 8, wobei der Unterdruck bei geöffneter Späneklappe (21) erfasst wird, um eine Verschmutzung des mindestens einen Siebs (23, 24) zu erfassen.

11. Verfahren gemäß Anspruch 9 oder 10, mit einer Blechbearbeitungsmaschine (1) gemäß einem der Ansprüche 5 bis 8, wobei der Unterdruck bei geschlossener Späneklappe (21) erfasst wird, um eine undichte Späneklappe (21) zu erfassen.

12. Verfahren gemäß Anspruch 10, wobei ein Verhältnis des Unterdrucks in der Absaugleitung (15) zu einem Unterdruck im Bereich der Matrizenöffnung (20) empirisch erfasst wird, so dass der Schwellwert für den Unterdruck im Bereich der Matrizenöffnung (20) über den Schwellwert des Unterdrucks in der Absaugleitung (15) bestimmt wird.

13. Verfahren gemäß Anspruch 11 mit einer Blechbearbeitungsmaschine (1) gemäß Anspruch 8, wobei bei dem Erfassen der undichten Späneklappe (21) die Steuerungsvorrichtung die Antriebseinrichtung (22) so ansteuert, dass die Späneklappe (21) eine Rüttelbewegung ausführt.

## Claims

1. Sheet metal processing machine (1) having a chip suctioning device (14) and a control device, wherein the chip suctioning device (14) comprises,
a chip space (16) connected to a die orifice (20) of a punching die (19) for collecting chips, wherein
the chip space (16) is provided with a chip flap (21) and an extraction line (15), and
the extraction line (15) comprises at least one sieve (23, 24),
an extraction fan (26) coupled to the extraction line (15) for generating a vacuum in the chip suctioning device (14), **characterized by**
a vacuum sensor (25), connected to the extraction line (15) between a downstream last sieve (24) and the extraction fan (26), being configured to supply signals to the control device.

2. Sheet metal processing machine (1) according to claim 1, wherein the chip suctioning device (14) comprises at least two sieves, wherein at least one sieve is formed as a coarse sieve and at least one sieve is formed as a fine sieve.

3. Sheet metal processing machine (1) according to claim 1 or 2, wherein the control device is configured to recognize from the signals of the vacuum sensor (25) at least one threshold indicating an undue pollution of the sieves (23, 24) .

4. Sheet metal processing machine (1) according to claim 3, wherein the control device is configured to recognize at least two thresholds from the signals of the vacuum sensor (25), and a second threshold indicates a critical pollution of the sieves (23, 24).

5. Sheet metal processing machine according to claim 3 or 4, wherein the control device is configured to recognize from the signals of the vacuum sensor (25) a threshold indicating a leaking chip flap (21).

6. Sheet metal processing machine (1) according to claim 5, wherein the chip flap (21) is provided with a drive device (22) being configured to execute a vibrating movement of the chip flap (21), and wherein the control device is configured to control the vibrating movement when the control devices recognizes the threshold indicating a leaking chip flap (21).

7. Sheet metal processing machine (1) according to any of the claims 3 to 6, wherein the vacuum sensor (25) is provided with a respective number of switching points for the thresholds.

8. Sheet metal processing machine (1) according to any of the claims 3 to 6, wherein the vacuum sensor (25) is configured to output pressure signals corresponding to the detected vacuum, and the control device is configured to determine whether the pressure signals assume values so that the at least one threshold is exceeded.

9. Method for detecting a failure in a chip suctioning device (14) in a sheet metal processing machine (1) according to any of the preceding claims comprising the following steps,
- detecting a vacuum between the extraction fan (26) and the downstream last sieve (24),
- determining by means of the vacuum by empirically ascertained values whether the failure in the chip suctioning device (14) exists,
- signaling the failure.

10. Method according to claim 9 with a sheet metal processing machine (1) according to any of the claims 3 to 8, wherein the vacuum is detected with the chip flap (21) opened to detect a pollution of the at least one sieve (23, 24).

11. Method according to claim 9 or 10 with a sheet metal processing machine (1) according to any of the claims 5 to 8, wherein the vacuum is detected with chip flap (21) closed to detect a leaking chip flap (21).

12. Method according to claim 10, empirically detecting a relationship between a vacuum in the extraction line (15) and a vacuum in the area of the die orifice (20) so that the threshold for the vacuum in the area of the die orifice (20) is determined by the threshold of the vacuum in the extraction line (15).

13. Method according to claim 11 with a sheet metal processing machine (1) according to claim 8, wherein, in response to the detection of the leaking chip flap (21), the control device controls the drive device (22) such that the chip flap (21) executes a vibrating movement.

## Revendications

1. Machine d'usinage de tôle (1) comprenant un dispositif d'aspiration de copeaux (14) et un dispositif de commande, le dispositif d'aspiration de copeaux (14) comprenant :
une chambre collectrice de copeaux (16) reliée à une ouverture (20) d'une matrice de perforation (19), la chambre collectrice de copeaux (16) étant équipée d'un volet de copeaux (21) et d'une conduite d'aspiration (15), et
la conduite d'aspiration (15) comprenant au moins un tamis (23, 24), un ventilateur d'aspiration (26) relié à la conduite d'aspiration (15) pour produire une dépression dans le dispositif d'aspiration de copeaux (14), **caractérisée par**
un détecteur de dépression (25) relié à la conduite d'aspiration (15) entre le dernier tamis aval (24) et le ventilateur d'aspiration (26) et qui est conçu pour fournir des signaux au dispositif de commande.

2. Machine d'usinage de tôle (1) conforme à la revendication 1,
dans laquelle le dispositif d'aspiration de copeaux (14) comprend au moins deux tamis, au moins un tamis étant réalisé sous la forme d'un tamis grossier et au moins un tamis étant réalisé sous la forme d'un tamis fin.

3. Machine d'usinage de tôle (1) conforme à la revendication 1 ou 2,
dans laquelle le dispositif de commande est réalisé pour identifier à partir des signaux du capteur de dépression (25) au moins une valeur de seuil qui indique un encrassement inadmissible des tamis (23, 24).

4. Machine d'usinage de tôle (1) conforme à la revendication 3,
dans laquelle le dispositif de commande est réalisé pour identifier à partir des signaux du capteur de dépression (25) au moins deux valeurs de seuil, la seconde valeur de seuil indiquant un encrassement critique des tamis (23, 24).

5. Machine d'usinage de tôle (1) conforme à la revendication 3 ou 4,
dans laquelle le dispositif de commande est réalisé pour identifier à partir des signaux du capteur de dépression (25) une valeur de seuil qui indique que le volet des copeaux (21) n'est pas étanche.

6. Machine d'usinage de tôle (1) conforme à la revendication 5,
dans laquelle le volet des copeaux (21) est équipé d'un dispositif d'entraînement (22) qui est réalisé pour provoquer un mouvement par secousses de ce volet des copeaux (21) et le dispositif de commande est réalisé pour commander le mouvement par secousses lorsqu'il identifie la valeur de seuil qui indique que le volet des copeaux (21) n'est pas étanche.

7. Machine d'usinage de tôle (1) conforme à l'une des revendications 3 à 6,
dans laquelle le capteur de dépression (25) est équipé de points de commutation pour chacune des valeurs de seuil.

8. Machine d'usinage de tôle (1) conforme à l'une des revendications 3 à 6,
dans laquelle le capteur de dépression (25) est réalisé pour délivrer des signaux de pression correspondant à la dépression détectée et le dispositif de commande est réalisé pour identifier si les signaux de pression prennent des valeurs indiquant que la valeur de seuil est dépassée.

9. Procédé permettant de détecter une défaillance d'un dispositif d'aspiration de copeaux (14) d'une machine d'usinage de tôle (1) conforme à l'une des revendications précédentes, comprenant les étapes suivantes consistant à :
- détecter une dépression entre le ventilateur d'aspiration (26) et le dernier tamis aval (24),
- déterminer à partir de la dépression et par des valeurs déterminées de manière empirique si une défaillance est présente dans le dispositif d'aspiration des copeaux (14),
- signaliser la défaillance.

10. Procédé conforme à la revendication 9, associé à une machine d'usinage de tôle (1) conforme à l'une des revendications 3 à 8,
selon lequel la dépression est détectée lorsque le volet des copeaux (21) est ouvert pour détecter un encrassement du tamis (23, 24).

11. Procédé conforme à la revendication 9 ou 10, associé à une machine d'usinage de tôle (1) conforme à l'une des revendications 3 à 8, selon lequel la dépression est détectée lorsque le volets des copeaux (21) est fermé pour détecter le fait que ce volet (21) n'est pas étanche.

12. Procédé conforme à la revendication 10,
selon lequel un rapport entre la dépression dans la conduite d'aspiration (15) et une dépression dans la zone de l'ouverture de la matrice (20) est détectée de manière empirique de sorte que la valeur de seuil de la dépression dans la zone de l'ouverture de la matrice (20) soit déterminée par l'intermédiaire de la valeur de seuil de la dépression dans la conduite d'aspiration (15).

13. Procédé conforme à la revendication 11, associé avec une machine d'usinage de tôle (1) conforme à la revendication 8, selon lequel lors de la détection du fait que le volet des copeaux (21) n'est pas étanche, le dispositif de commande commande le dispositif d'entraînement (22) de sorte que le volet des copeaux (21) soit soumis à un mouvement par secousses.
